# EUROPEAN PATENT APPLICATION

(11) **EP 1 269 864 A1**
(43) Date of publication of application: **02.01.2003**
(21) Application number: 01203393.2
(22) Date of filing: 10.09.2001
(51) Int. Cl.: A23L 1/40, A23L 1/29, A23L 1/314, A23L 1/22, A23L 1/325, A23L 1/237, A23P 1/02, A23P 1/08

(54) **"Hard bouillon tablet"**

(30) Priority: 20.06.2001 EP 01202380
(71) Applicant: SOCIETE DES PRODUITS NESTLE S.A., 1800 Vevey (CH)
(72) Inventor: Palzer, Stefan, 8320 Fehraltorf (CH); Enggist, Alfred, 8302 Kloten (CH); Harris, Brenda, 8422 Pfungen (CH); Soltermann, Patrick, 8500 Frauenfeld (CH); Schmutz, Walter, 8604 Volketswil (CH)
(74) Representative: Wavre, Claude-Alain

(57) **Abstract**

A hard bouillon tablet which comprises only or mainly oil and no or little fat beside non fat conventional bouillon ingredients.

## Description

The present invention relates to a hard bouillon tablet and to a process for the production of a hard bouillon tablet.

A conventional way of manufacturing hard bouillon tablets comprises mixing powdered bouillon components with fat and no or only little amounts of oil, and pressing the mix into tablet form.

Nowadays there is a nutritional trend to avoid or at least reduce consumption of fats rich in trans fatty acids and saturated fatty acids and to preferably consume healthy oils rich in monounsaturated fatty acids and/or polyunsaturated fatty acids such as sunflower, safflower, canola and/or olive oil, for example.

A first object of the present invention is to provide a hard bouillon tablet which only or mainly contains oil, especially a healthy oil rich in monounsaturated fatty acids and/or polyunsaturated fatty acids, and no or only little amounts of fat beside non fat conventional bouillon ingredients.

A second object of the present invention is to provide a hard bouillon tablet which has no or only little fat solidification after rehydratation with hot water when the rehydrated product is getting cold.

A third object of the present invention is to provide a hard bouillon tablet which has an improved cold water solubility.

A fourth object of the present invention is to provide a hard bouillon tablet whith an improved, fresh appearance, especially if it comprises garnishes such as dehydrated vegetables and/or herb leafs, for example.

A fifth object of the present invention is to provide a process for manufacturing such a bouillon tablet.

It has now been found that the first four objects of the present invention can be met by a hard bouillon tablet which comprises, in total tablet weight %, from 1 to 20% of an oil and possibly fat, from 4 to 80% of a milled filler, up to 95% of a non milled filler, from 4 to 20% of a stickening agent, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, dehydrated vegetables, herb leafs and/or plant extracts.

The fifth object of the present invention can be met by a process for the production of a hard bouillon tablet, which consists of preparing a dry premix of powdered constituents comprising, in total tablet weight %, from 4 to 80% of a milled filler and up to 95% of a non milled filler, atomising, in total tablet weight %, from 1 to 20% of an oil onto the dry premix while further mixing, optionally adding dehydrated vegetables and/or herb leafs, and tableting the final mixture thus obtained, wherein, in total tablet weight %, from 4 to 20% of a stickening agent and optionally spices, flavours, and/or plant extracts are added to the dry premix or to the mixture of dry premix and oil, and wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix or to the oil.

Throughout the present description, the expression "bouillon" is to be understood as meaning "bouillon and/or seasoning".

The expression "hard bouillon tablet" means "tablet obtained by pressing a free flowing bouillon powder into a tablet form".

The expression "oil" means "oil or mixture of oils which is liquid at room temperature and which more especially has a solid fat content (SFC) of less than 5% at 20°C".

The expression "milled filler" means "a powdered filler which has been milled to an especially fine granulometry or which has an especially fine granulometry".

The expression "non milled filler" means "a powdered filler which has not been milled to an especially fine granulometry or which does not have an especially fine granulometry".

Thus, it has surprisingly been found that it is possible to have only or mainly oil and no or only little fat entrapped in a hard bouillon tablet provided the tablet also comprises a milled filler and a stickening agent.

In this way, it is indeed possible to provide a hard bouillon tablet which only or mainly contains oil, especially a healthy oil rich in monounsaturated fatty acids and/or polyunsaturated fatty acids , and no or only little fat beside non fat conventional bouillon ingredients.

Thus, the present invention also involves a method for improving the nutritional quality of a hard bouillon tablet by at least partially replacing in the hard bouillon tablet, fats which contain trans fatty acids and/or saturated fatty acids with oils rich in monounsaturated fatty acids and/or polyunsaturated fatty acids.

Moreover, the present invention further involves a method for reducing consumption of trans fatty acids and/or saturated fatty acids by administering a food product prepared from a hard bouillon tablet in which fats which contain trans fatty acids and/or saturated fatty acids are at least partially replaced with oils rich in monounsaturated fatty acids and/or polyunsaturated fatty acids.

Such a hard bouillon tablet indeed has no or only little fat solidification after rehydratation with hot water when the rehydrated product is getting cold, and indeed has an improved cold water solubility.

In addition, the present hard bouillon tablet surprisingly appears to have an improved, fresher and nicer appearance than that of a traditional hard bouillon tablet, due to what may be called a natural polish of its surfaces as compared with the rather rough or mat surfaces of a traditional hard bouillon tablet.

Thus, the present invention further involves a method of improving the appearance of a hard bouillon tablet by at least partially replacing fats in the tablet with oils.

In the present hard bouillon tablet, the oil may be any suitable food grade oil, especially a healthy oil such as sunflower oil, safflower oil, olive oil and/or canola oil, for example.

The fat may be palm fat, palmolein or chicken fat, for example.

The milled filler may be a milled crystalline ingredient such as salt (sodium chloride), glutamate and/or sugar (sucrose), for example.

It may also be a fine powder of a porous ingredient such as maltodextrin and/or starch, which adsorbs the oil, for example.

A milled crystalline ingredient may have been milled to fine particles having a mean diameter of from 5 to 80 µm, for example.

The mean diameter is defined as a 50% limit (D50) in particle distribution whereby 50% by volume of the particles have a diameter below the 50% limit and 50% by volume of the particles have a diameter above the 50% limit.

Preferably, these fine particles also have a span of from 2.0 to 5.0.

The span is defined as the broadness or width in particle distribution between a 10% limit (D10) and a 90% limit (D90) divided by the mean particle diameter (D50), whereby 10% by volume of the particles have a diameter below the 10% limit and 10% by volume of the particles have a diameter above the 90% limit.

The so called non milled filler may be a powdered crystalline ingredient such as salt, glutamate and/or sugar which has not been milled to an especially fine granulometry but which comprises particles the mean diameter of which is of from about 100 to about 600 µm, preferably from about 200 to about 600 µm and more preferably from about 300 to about 500 µm, for example.

The stickening agent may comprise ingredients the addition of which (combined with an adequate increase of the Aw value) may impart a glass transition temperature to the final mixture which may be relatively easily exceeded during tableting. Such ingredients may comprise meat extract, processed flavours and/or maltodextrin, for example.

In this case, the present hard bouillon tablet preferably comprises from 10 to 20% maltodextrin and 0.8 to 1.2% added water.

This maltodextrin preferably has a DE value of from 10 to 60, more preferably of from 20 to 50, and the Aw value of this hard bouillon tablet preferably is of from 0.3 to 0.5.

As stated above, the present process for the production of a hard bouillon tablet consists of preparing a dry premix of powdered constituents comprising, in total tablet weight %, from 4 to 80% of a milled filler and up to 95% of a non milled filler, atomising, in total tablet weight %, from 1 to 20% of an oil onto the dry premix while further mixing, optionally adding dehydrated vegetables and/or herb leafs, and tableting the final mixture thus obtained, wherein, in total tablet weight %, from 4 to 20% of a stickening agent and optionally spices, flavours, and/or plant extracts are added to the dry premix or to the mixture of dry premix and oil, and wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix or to the oil.

Preparing the premix may be carried out by means of any suitable traditional powder mixer such as a horizontal mixer with plough-shaped heads arranged on its horizontal shaft or a ribbon mixer, for example.

The oil may be atomised onto the dry premix through any adequate nozzle such as simple or a binary nozzle, for example. Further mixing preferably is combined with chopping in order to better agglomerate the oil with the milled filler.

The fat may be added either in solid form to the dry premix or in liquefied form to the oil, for example.

If maltodextrin is used as stickening agent, the added water may be incorporated by emulsification into the oil before atomisation, for example.

Tableting may be carried out under a pressure of from 10 to 150 bar (1 to 15 MPa), for example.

A further, special advantage of an embodiment of the present process in which no or only little amounts of fat and only or mainly oil is used is that, in contrast with a conventional process, it is not necessary to ripen the mass which can immediately be tableted. The fat in conventional hard bouillon tablets namely has to be cooled and crystallised either before or after adding the rest of the ingredients.

Embodiments of the hard bouillon tablet and of the process for producing it according to the present invention are illustrated in the following Examples in which the percentages are by weight unless indicated to the contrary.

The Examples are preceded by a short description of the method used for analysing the particle size of the milled filler.

### Method 1: Particle size analysis

The particle size of the milled filler was analysed by means of a laser diffraction particle sizer (MASTERSIZER S, Malvern Instruments Ltd., Malvern/GB), coupled with a fully automated, air pressure controlled dry powder feeder (GMP ultra).

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50)
**D10:** 10% limit (10% by volume of the particles had a diameter below D10)
**D90:** 90% limit (10% by volume of the particles had a diameter above D90)
**Span:** (D90-D10)/D50

### Example 1

A hard, herb bouillon tablet was produced which had the following composition:
- 47 % milled salt
- 20 % milled monosodium glutamate
- 13 % maltodextrin with a DE value of 50
- 12 % olive oil
- 6.5 % dehydrated powdered aromatics and spices
- 1.4 % water containing plant extract solution (70 % water)
- 0.1 % dried herbs (like thyme or oregano)

The granulometry of the milled salt was as follows:
D10: 8.79 µm
D50: 44.45 µm
D90: 142.54 µm
Span: 3.0

The granulometry of the milled glutamate was as follows:
D10: 4.80 µm
D50: 27.27 µm
D90: 101.69 µm
Span: 3.55

The production process comprised the following steps:

The plant extract solution was emulsified with the olive oil in a high pressure homogenisator.

The emulsion was atomised on a premix of the powdered ingredients in a ploughshare mixer with chopper.

The dried herbs were added in the end.

The mixture thus obtained was tableted under a pressure of 10-150 bar.

The hard bouillon tablet thus obtained contained only olive oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

### Example 2

A hard, vegetable bouillon tablet was produced which had the following composition:
- 44 % milled jodid containing salt
- 20 % milled monosodium glutamate
- 14 % maltodextrin with a DE value of 45
- 12 % sunflower oil
- 6.7 % powdered aromatics and spices (mainly vegetable flavours)
- 2 % dried vegetables
- 1.3 % colouring water based solution of plant extracts (e.g. curcuma)

The respective granulometries of salt and glutamate were as shown in Example 1.

The production process comprised the following steps:

The solution of plant extract was emulsified with the sunflower oil in a high pressure homogeniser.

The emulsion was atomised on a premix of the powdered ingredients in a ploughshare mixer with chopper.

The dried vegetables were added in the end.

The mixture thus obtained was tableted under a pressure of 10-150 bar.

The hard, vegetable bouillon tablet thus obtained contained only sunflower oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

### Example 3

A hard, beef-type bouillon tablet was produced which had the following composition:
- 43 % milled salt
- 18 % maltodextrin with a DE value of 30
- 15.8 % powdered aromatics and spices (e.g. meat flavour)
- 11 % sunflower oil
- 9 % monosodium glutamate
- 1.8 % sugar
- 1 % additional water
- 0.4 % dried herbs (parsley)

The respective granulometries of salt and glutamate were as shown in Example 1.

The production process comprised the following steps:

The 1% additional water was emulsified with the sunflower oil in a fast rotating stirrer.

The emulsion was atomised on a premix of the powdered ingredients in a ploughshare mixer with chopper.

The dried herbs were added in the end.

The hard, beef-type bouillon tablet thus obtained contained only sunflower oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

## Claims

1. A hard bouillon and/or seasoning tablet which comprises, in total tablet weight %, from 1 to 20% of an oil and possibly fat, from 4 to 80% of a milled filler, up to 95% of a non milled filler, from 4 to 20% of a stickening agent, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, dehydrated vegetables, herb leafs and/or plant extracts.

2. A hard bouillon and/or seasoning tablet according to claim 1, in which the oil is a healthy oil selected from a group comprising sunflower oil, safflower oil, olive oil and/or canola oil.

3. A hard bouillon and/or seasoning tablet according to claim 1, in which the milled filler is a milled crystalline ingredient, especially a crystalline ingredient selected from a group comprising salt, glutamate and/or sugar.

4. A hard bouillon and/or seasoning tablet according to claim 3, in which the milled crystalline ingredient comprises fine particles having a mean diameter of from 5 to 80 µm and a span of from 2.0 to 5.0.

5. A hard bouillon and/or seasoning tablet according to claim 1, in which the stickening agent comprises an ingredient the addition of which (combined with an adequate increase of the Aw value) is capable of imparting a glass transition temperature to the final mixture which may be exceeded during tableting.

6. A hard bouillon and/or seasoning tablet according to claim 5, which comprises, as stickening agent, from 10 to 20% maltodextrin having a DE value of from 10 to 60, preferably of from 20 to 50, and from 0.8 to 1.2% added water.

7. A process for the production of a hard bouillon tablet, which consists of preparing a dry premix of powdered constituents comprising, in total tablet weight %, from 4 to 80% of a milled filler and up to 95% of a non milled filler, atomising, in total tablet weight %, from 1 to 20% of an oil onto the dry premix while further mixing, optionally adding dehydrated vegetables and/or herb leafs, and tableting the final mixture thus obtained, wherein, in total tablet weight %, from 4 to 20% of a stickening agent and optionally spices, flavours, and/or plant extracts are added to the dry premix or to the mixture of dry premix and oil, and wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix or to the oil.

8. A process according to claim 7, wherein the premix comprises, as stickening agent, from 10 to 20% maltodextrin having a DE value of from 10 to 60, preferably from 20 to 50, and from 0.8 to 1.2% of water are added in form of an emulsion in the oil.

9. A method for improving the nutritional quality of a hard bouillon and/or seasoning tablet by at least partially replacing in the tablet, fats which contain trans fatty acids and/or saturated fatty acids with oils rich in monounsaturated fatty acids and/or polyunsaturated fatty acids.

10. A method for reducing consumption of trans fatty acids and/or saturated fatty acids by administering a food product prepared from a hard bouillon and/or seasoning tablet in which fats which contain trans fatty acids and/or saturated fatty acids are at least partially replaced with oils rich in monounsaturated fatty acids and/or polyunsaturated fatty acids.

11. A method of improving the appearance of a hard bouillon and/or seasoning tablet by at least partially replacing fats in the tablet with oils.
